# EUROPEAN PATENT SPECIFICATION

(11) **EP 3 932 133 B1**
(45) Date of publication and mention of the grant of the patent: **20.09.2023**
(21) Application number: 20727604.9
(22) Date of filing: 19.05.2020
(51) Int. Cl.: H04B 7/06, H04W 52/28

(54) **TRANSMITTER DEVICE, AND METHODS FOR CONTROLLING TRANSMITTER DEVICE**
SENDERVORRICHTUNG UND VERFAHREN ZUR STEUERUNG DER SENDERVORRICHTUNG
DISPOSITIF ÉMETTEUR, ET PROCÉDÉS DE COMMANDE DE DISPOSITIF ÉMETTEUR

(43) Date of publication of application: 05.01.2022
(73) Proprietor: Huawei Technologies Co., Ltd., Longgang District Shenzhen Guangdong 518129 (CN)
(72) Inventor: KOBZANTSEV, Alexander, 80992 Munich (DE); PATURY, Shahar, 80992 Munich (DE); EZRI, Doron, 80992 Munich (DE); WEITZMAN, Avi, 80992 Munich (DE); PAN, Chun, 80992 Munich (DE); JIANG, Xingfeng, 80992 Munich (DE); FENG, Bing, 80992 Munich (DE)
(74) Representative: Epping - Hermann - Fischer
(86) International application number: PCT/EP2020/063929
(87) International publication number: WO 2021/233529

(56) References cited:
- CN-A- 110 824 425
- US-A1- 2014 112 175
- US-A1- 2014 328 264

## Description

### TECHNICAL FIELD

The present disclosure relates generally to the field of wireless communication technology; and more specifically, to a transmitter device and methods for controlling the transmitter device transmitting on a channel with multiple transmitter devices in a wireless network.

### BACKGROUND

With the rapid increase in the number of communication devices, concerns about communication reliability have become prominent in wireless networks. Traditionally, a carrier sense multiple access collision avoidance (CSMA/CA) access method may be used for utilizing same communication channel by multiple transmitter devices on a wireless network. In CSMA/CA access method, multiple access points (APs) may use the same channel and space (sharing the medium) in case of availability of fewer channels than Aps. However, CSMA/CA access method allows only one user to transmit at a time while other users remain idle (when at the same frequency band and located at nearly close proximity to each other). Moreover, CSMA/CA access method increases the Collision and Hidden Nodes probability, which increase the packet error rate (PER) and noise level. In High Density (HD) and Very High Density (VHD) deployments, the distance between cells is short (usually 10m to 30m), this increases the Wi-Fi devices unused time (or "Time Shared"). As long as devices 'hears' the signal higher than CCA Threshold, they will differ from the medium. Therefore, in many HD/VHD deployments the throughput per channel is almost fixed and declines when the number of APs per channel increases. Therefore, adding more APs to the deployment usually does not significantly increase the network data rate.

Newly proposed wireless communication standards, such as IEEE 802.11 TGax, sometimes referred to as IEEE 802.11 ax standard or for short 11ax and also known as High-Efficiency Wireless (HEW), focuses on implementing mechanisms to serve more users a consistent and reliable stream of data (average throughput) in the presence of many other users. To improve the system level performance and the efficiency due to CSMA/CA access method in HD/VHD scenarios, the 802.11ax standard implements a Spatial Reuse (SR) technique. SR enables the sharing of the medium between two or more transmitter devices using the same channel, time and space. In order for receiver device to select its transmitter in SR environment, stations (STAs) can identify signals by using the Basic Service Sets (BSS) coloring schema. When a station, that is actively listening to the medium detects an 802.11ax frame, it checks the BSS color bits. If the BSS color in the detected PPDU (PLCP (Physical Layer Convergence Procedure) Protocol Data Unit) is the same color as its associated AP announced, then the STA considers that frame as an intra-BSS frame. However, if the detected frame has a different BSS color than its own, then the STA considers that frame as an inter-BSS frame from an overlapping BSS. 802.1 1ax devices treats the medium as CCA-BUSY only during the time it takes the STA to validate that the frame is from an inter-BSS, but not longer than the time indicated as the length of the frame's payload. In this way, SR is used in 802.1 1ax standard to utilize the medium (frequency, time and space) by multiple devices and avoiding collisions between packets from those devices. SR concept enables multiple devices to share the same frequency, time and space by using different BSS color and ID.

As per above, the transmitter device may use conventional SR method for comparatively better utilization of same communication channel by multiple transmitter devices at the same time. SR session starts by the AP that got access to the medium, and this AP is called "SR Initiator AP" (IAP) that indicates that it is willing to share the medium with others. Other APs that have data to transmit, may start using the medium, and those APs are called the Participants APs (PAP). The major SR challenge is adjustment of the CCA threshold and transmission (Tx) power level to prevent mutual interferences between IAP and PAP. The main idea behind those adjustments are that the CCA threshold should be at a maximum level and the Tx power should be at a minimum level i.e., working only with the close distance STAs. In known implementation of SR method, the PAP decreases its Tx power in order to reduce interference with the IAP, however, reduction in Tx power significantly decreases the radius of the cell coverage, thus only small number of users assigned to PAP may be able to utilize the benefits of SR approach, while the others will be out of coverage. Using low Tx power by the PAP may also require lower MCS (Modulation and Coding Scheme Index) use, both in IAP and PAP. This result in lower Signal-to-interference-plus-noise ratio (SINR), more re-transmissions, inferior performance and, thus, overall decreased efficiency of the wireless communication network. To summarize adaptive Tx power and CCA thresholds enables the SR, but may decrease the efficiency of SR due to low probability that neighbour APs will join the IAP SR opportunity and usage of low MCS by PAP/IAP.

In some scenarios, the transmitter device may use adaptive Tx power (generally, to decrease Tx power), together with adjustable sensitivity thresholds at receiver, aimed to avoid the Document US 2014/0112175 A1 solve problems of throughput reduction due to collisions, busy medium, and deferred transmission due to overlapping wireless networks (e.g. 802.11 OBSS) by allowing devices suffering from overlapping interference to have sufficient chances to transmit and/or receive successfully. This includes methods for a first device (e.g. 802.11 AP) to communicate data via a medium shared with other devices (e.g. 802.11 APs and/or STAs) located in an overlapping service area but not under common control with the first device. This also include methods for a first device (e.g. 802.11 AP) to negotiate reservation of a shared medium requested by a second device (e.g. 802.11 AP), the two devices being in overlapping service areas but not under common control. Further, this include wireless communication devices (e.g. 802.11 APs) and computer programs or computer-readable media embodying one or more of the methods.

### SUMMARY

The present disclosure seeks to provide methods, devices, and computer program products for implementation in a wireless communication network.

The present disclosure seeks to provide a solution to the existing problem of inefficient and unreliable utilization of same communication channel by multiple transmitter devices in a wireless communication network. An aim of the present disclosure is to provide a solution that overcomes at least partially the problems encountered in prior art, and provides improved methods and devices that are able to efficiently and reliably utilize same communication channel by the multiple transmitter devices.

The object of the present disclosure is achieved by the solutions provided in the enclosed independent claims. Advantageous implementations of the present disclosure are further defined in the dependent claims.

In a first aspect, a first transmitter device for use in a wireless network, arranged to transmit signals on a first channel is provided. The first transmitter device comprises a control unit arranged to identify at least a second transmitter device in the wireless network, transmitting on the first channel. The control unit further obtain location information related to the location of a first user terminal communicating with the second transmitter device. The control unit further suppresses energy transmission from the first transmitter device, in at least a first direction selected to avoid interference with a signal transmitted by the at least second transmitter device.

The control unit, in the first transmitter device, enables identification of the second transmitter device that initiates a spatial reuse session in the first channel such that the first transmitter device may join the spatial reuse session. The control unit obtains location of the first user device terminal communicating with the second transmitter device. The control unit, then, regulate direction and intensity of transmission energy of the first transmitter device, e.g., the control unit supresses energy in the direction of the first user device, which results in reduced interference in the channel. Additionally, obtaining location of the first user terminal allows the first transmitter to increase its transmission power in other directions without the risk of interference even when transmitting with higher transmission power, thus increasing overall throughput of the channel.

In a possible implementation form, the control unit is arranged to identify a non-interfering user terminal located in a direction from the first transmitter different from the first direction and control the first transmitter to communicate with the non-interfering user terminal.

The control unit identifies the user terminals located in directions other than the first direction, which would be non-interfering user terminals as far as with respect to the second transmitter device. This allows the control unit to increase transmission power of the first transmitter device, by steering more energy, towards the directions of non-interfering user terminals without much risk of interference with the second transmitter device.

In a further possible implementation form, the first transmitter device is arranged to identify the at least second transmitter when the second transmitter initiates a spatial reuse session.

The first transmitter device identifies the second transmitter device so that the first transmitter device can join the spatial reuse session when the second transmitter device initiates the spatial reuse session.

In a further possible implementation form, the first transmitter device is arranged to adjust its transmit power to prevent interference.

The first transmitter is arranged to adjust its transmit power based on locations of the first user terminal (communicating with the second transmitter device) and the non-interfering user terminal to minimize interference. For example, the first transmitter increases its transmit power in the direction towards the non-interfering user terminal and thus, increases coverage and signal to interference plus noise ratio level of the first transmitter. Further, the first transmitter steers beam towards desired direction and suppresses transmit power in other directions, specifically towards the first user terminal, to avoid interference with the second transmitter device.

According to the invention, the first transmitter device is arranged to obtain location information in the form of angle of access between the first user terminal and the second transmitter device.

The angle of access determines location and direction of the first transmitter device with respect to the second transmitter device and the first user terminal. The angle of access helps in determining possible area/volume and directions of inference between the first transmitter device and the second transmitter device and thus, allows the first transmitter device to determine in which direction to increase or decrease transmission power to prevent interference. Herein, the location information of the first user terminal determined by angle of access is also used to determine the transmit power of the first transmitter device to prevent interference. For example, if location of the first user terminal is near to a user terminal of the first transmitter device, the first transmitter device utilizes beam-forming to cater to the corresponding user terminal while supressing its transmit power in the direction of the first user terminal.

In a further possible implementation form, a first transmitter device is arranged to obtain location information in the form of a position of the first user terminal.

The first transmitter device obtains position of the first user terminal so that the first transmitter device may regulate direction of its transmit power according to the position of the first user terminal to prevent interference. Further, the first transmitter device may identify the non-interfering user terminal with respect to and based on the obtained location of the first user terminal.

In a further possible implementation form, a first transmitter device is arranged to obtain the location information based on information received from the second transmitter device and/or at least a third transmitter device in the wireless network.

Herein, the third transmitter device is used as reference for determining the location information of the user terminal of the second transmitter device, e.g. by using techniques like triangulation or trilateration.

The first transmitter is arranged to adjust its transmit power based on locations of the first user terminal (communicating with the second transmitter device) and the non-interfering user terminal to minimize interference. For example, the first transmitter increases its transmit power in the direction towards the non-interfering user terminal and thus, increases coverage and signal to interference plus noise ratio level of the first transmitter. Further, the first transmitter steers beam towards desired direction and suppresses transmit power in other directions, specifically towards the first user terminal, to avoid interference with the second transmitter device.

In a further possible implementation form, the first transmitter device is arranged to obtain location information in the form of angle of access between the first user terminal and the second transmitter device.

The angle of access determines location and direction of the first transmitter device with respect to the second transmitter device and the first user terminal. The angle of access helps in determining possible area/volume and directions of inference between the first transmitter device and the second transmitter device and thus, allows the first transmitter device to determine in which direction to increase or decrease transmission power to prevent interference. Herein, the location information of the first user terminal determined by angle of access is also used to determine the transmit power of the first transmitter device to prevent interference. For example, if location of the first user terminal is near to a user terminal of the first transmitter device, the first transmitter device utilizes beam-forming to cater to the corresponding user terminal while supressing its transmit power in the direction of the first user terminal.

In a further possible implementation form, a first transmitter device is arranged to obtain location information in the form of a position of the first user terminal.

The first transmitter device obtains position of the first user terminal so that the first transmitter device may regulate direction of its transmit power according to the position of the first user terminal to prevent interference. Further, the first transmitter device may identify the non-interfering user terminal with respect to and based on the obtained location of the first user terminal.

In a further possible implementation form, a first transmitter device is arranged to obtain the location information based on information received from the second transmitter device and/or at least a third transmitter device in the wireless network.

Herein, the third transmitter device is used as reference for determining the location information of the user terminal of the second transmitter device, e.g. by using techniques like triangulation or trilateration. The first transmitter device can use the obtained location information to regulate its transmission power and direction, and thereby minimize interference in the channel.

In a further possible implementation form, a first transmitter device is arranged to receive said location information from the at least one user terminal.

In some scenarios, there may be more than one user terminal for example, three user terminal that communicates with the second transmitter device. Each of the user terminal may interfere with the first transmitter device, while communicating with the second transmitter device. Hence, the first transmitter device receives location information from each of the user terminals to regulate its transmission power and direction, and thereby minimize interference in the channel.

In a further possible implementation form, a device, such as an access point device for use in a wireless network characterized in that it comprises a first transmitter device.

The device incorporates the first transmitter device, including the control unit thereof of the first aspect, and thereby achieves all the advantages and effects of the first transmitter device of the first aspect.

In a second aspect, a method of controlling a transmitter device arranged to transmit on a first channel in a wireless network is provided. The method comprising the steps of identifying at least a second transmitter device transmitting on the first channel in the wireless network. The method further comprises obtaining location information related to the location of at least one user terminal communicating with the second transmitter device and suppressing energy transmission from the first transmitter device, in at least a first direction selected to avoid interference with a signal transmitted by the at least second transmitter device.

The method of the second aspect provides means for controlling the first transmitter device as achieved by the control unit of the first transmitter device, and thereby achieves all the advantages and effects of the first transmitter device of the first aspect.

In a possible implementation form, a method comprises the steps of identifying a non-interfering user terminal located in a direction from the first transmitter different from the first combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1A is an illustration of a conventional spatial reuse session;
FIG. 1B is an illustration of a conventional spatial reuse session using a conventional beam-forming transmission technique;
FIG. 2 is a block diagram of a wireless network, in accordance with an embodiment of the present disclosure;
FIG. 3 is an illustration of a spatial reuse session using a smart beamform transmission technique, in accordance with an embodiment of the present disclosure;
FIGs. 4A and 4B are an exemplary illustration for identifying the non-user terminal from the first transmitter device, in accordance with an embodiment of the present disclosure;
FIG. 5 is a graphical representation that illustrates comparative results of the different methods for controlling a first transmitter device to transmit on a first channel;
FIG. 6 is a flowchart of a method for controlling a transmitter device arranged to transmit on a first channel in a wireless network, in accordance with an embodiment of the present disclosure; and
FIG. 7 is a block diagram of a device for use in a wireless network, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

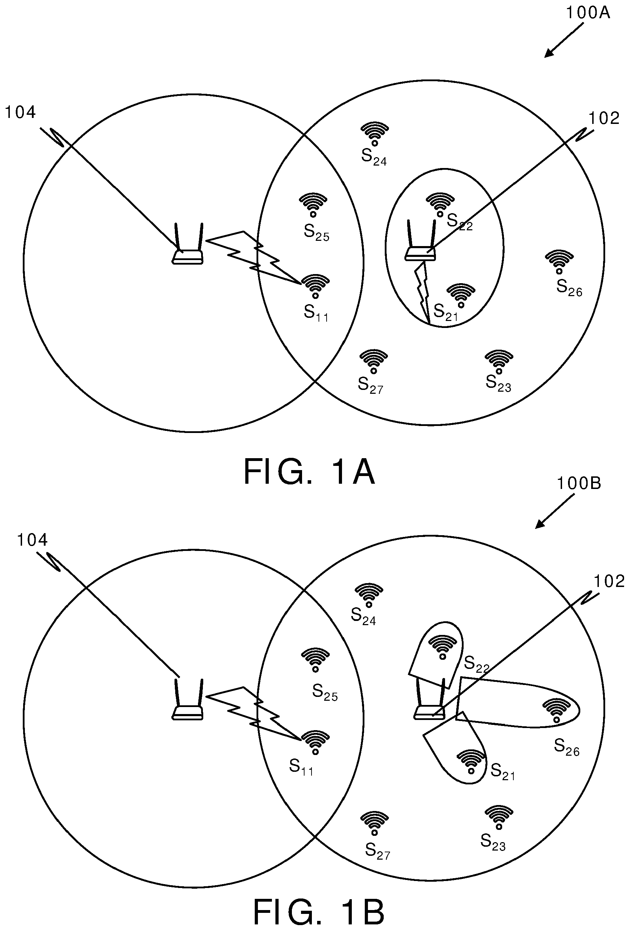

FIG. 1A is an exemplary illustration of a system **100A** implementing conventional or standard spatial reuse session. The conventional spatial reuse session is implemented by the system **100A** for sharing of a channel between plurality of transmission devices using the same channel. The conventional spatial reuse session of the system **100A** comprises two neighbouring transmitter devices, a conventional first transmitter device **102** and a conventional second transmitter device **104** respectively. The conventional first transmitter device **102** comprises assigned user terminals S₂₁, S₂₂, S₂₃ to S₂₇ and the conventional second transmitter device **104** comprises assigned user terminals S₁₁. The conventional second transmitter device **104** initiates the standard spatial reuse session while the conventional first transmitter device **102** joins the standard spatial reuse session to transmit to assigned user terminals S₂₁, S₂₂, S_{23,} ..., S₂₇. The conventional first transmitter device **102** adjusts its transmission power in order to avoid the interference to ongoing communication between the conventional second transmitter device **104** and the user terminals S₁₁. However, the conventional first transmitter device **102** needs to decrease its transmission power significantly to avoid the interference, which decreases coverage of the conventional first transmitter device **102.** As may be seen, only the user terminals S₂₁ and S₂₂ are in the coverage range of the first transmitter device **102** when the transmission power is decreased while the user terminals S₂₃, S₂₄, ..., S₂₇ are out of coverage range of the first transmitter device **102.** Hence, the standard spatial reuse session of the system **100A** allows the conventional first transmitter device **102** to transmit only to a small number of assigned user terminals on the same channel.

FIG. 1B is an exemplary illustration of a system **100B** implementing a spatial reuse technique using a conventional or standard blind beam-forming transmission session. Herein, FIG. 1B has been described in conjunction with elements from FIG. 1A. In the conventional blind beamforming transmission session, as implemented by the system **100B,** the conventional first transmitter device **102** does not have prior location information of the user terminals of the second transmitter device **104.** With reference to FIG. 1B, there is shown the conventional first transmitter device **102** which joins the conventional blind beamforming transmission session to transmit to assigned user terminals S₂₁, S₂₂, S₂₃ to S₂₇. As may be seen, only the user terminals S₂₁, S₂₂ and S₂₆ are in the coverage range of the first transmitter device **102** in the blind beamforming transmission session while the user terminals S₂₃, S₂₄, S₂₅ and S₂₇ are out of coverage range of the conventional first transmitter device **102** as the first transmitter device **102** could not steer power towards the user terminals S₂₃, S₂₄, S₂₅ and S₂₇ due to no prior location information of the user terminals of the conventional second transmitter device **104.** Further, the conventional first transmitter device **102** has high risk of interference with the user terminal S₁₁ of the conventional second transmitter device **104** in the absence of prior location information of the user terminal S₁₁.

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

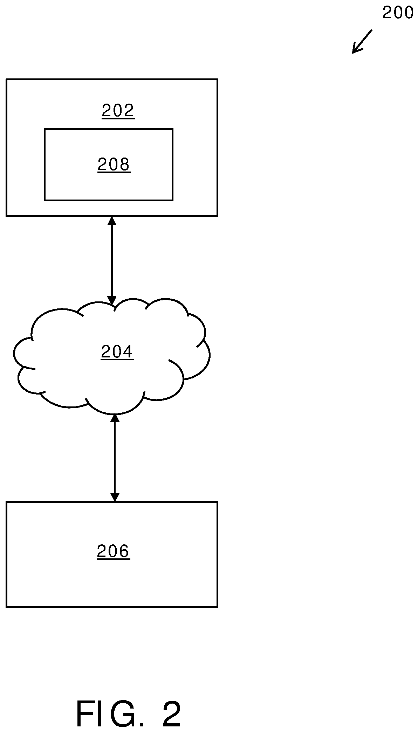

FIG. 2 is a block diagram of a system **200,** representing a wireless network with the two terms being interchangeably used herein. Herein, the wireless network **200** relates to an arrangement of interconnected programmable and/or non-programmable components that are configured to facilitate data communication between one or more electronic devices, whether available or known at the time of filing or as later developed. The wireless network **200** may include, but is not limited to, a cellular network (e.g. a 2G, a 3G, long-term evolution (LTE) 4G, a 5G, or 5G NR network, such as sub 6 GHz, cmWave, or mmWave communication network), one or more peer-to-peer network, a hybrid peer-to-peer network, local area networks (LANs), radio access networks (RANs), metropolitan area networks (MANS), wide area networks (WANs), all or a portion of a public network such as the global computer network known as the Internet, a private network, a cellular network and any other communication system or systems at one or more locations. Additionally, the wireless network **200** can be carried out via any number of known protocols, including, but not limited to, Internet Protocol (IP), Wireless Access Protocol (WAP), Frame Relay, or Asynchronous Transfer Mode (ATM). Moreover, any other suitable protocols using voice, video, data, or combinations thereof, can also be employed. Moreover, although the wireless network **200** is frequently described herein as being implemented with TCP/IP communications protocols, the wireless network **200** may also be implemented using IPX, Appletalk, IP-6, NetBIOS, OSI, any tunnelling protocol (e.g. IPsec, SSH), or any number of existing or future protocols.

The wireless network **200** comprises a first transmitter device **202** arranged to transmit on a first channel **204,** in accordance with an embodiment of the present disclosure. The wireless network **200** further comprises a second transmitter device **206,** which is also transmitting on the first channel **204.** The first transmitter device **202** and the second transmitter device **206** relates to electronic devices associated with (or used by) a user that is capable of enabling the user to perform specific tasks. Furthermore, the first transmitter device **202** and the second transmitter device **206** are intended to be broadly interpreted to include any electronic device that may be used for voice and/or data communication over a wireless communication network. Examples of the first transmitter device **202 and** the second transmitter device **206** include, but are not limited to, a router, a modem, a smart phone, a tablet, a laptop, a wireless network card, cellular phones, personal digital assistants (PDAs), handheld devices, wireless modems, laptop computers, personal computers, etc. Additionally, the first transmitter device **202** and the second transmitter device **206** may include a casing, a memory, a processor, a network interface card, a microphone, a speaker, a keypad, and a display. Moreover, the first transmitter device **202** and the second transmitter device **206** are to be construed broadly, so as to encompass a variety of different types of mobile stations, subscriber stations or, more generally, communication devices, including examples such as a combination of a data card inserted in a laptop. Such communication devices are also intended to encompass devices commonly referred to as "access terminals".

The first transmitter device **202** and the second transmitter device **206** may be transmitting on the first channel **204** using wireless communication protocols, communication standards, and technologies that may include, but are not limited to, IEEE 802.11, 802.15, 802.16, 1609, Worldwide Interoperability for Microwave Access (Wi-MAX), Transmission Control Protocol and Internet Protocol (TCP/IP), User Datagram Protocol (UDP), Hypertext Transfer Protocol (HTTP), Long-term Evolution (LTE), File Transfer Protocol (FTP), Enhanced Data GSM Environment (EDGE), Voice over Internet Protocol (VoIP), a protocol for email, instant messaging, and/or Short Message Service (SMS), and/or other cellular or loT communication protocols.

The first transmitter device **202** comprises a control unit **208** arranged to identify at least the second transmitter device **206** in the wireless network **200,** transmitting on the first channel **204.** Herein, the control unit **208** relates to a structure and/or module that include programmable and/or non-programmable components configured to store, process and/or share information. Optionally, the control unit **208** includes any arrangement of physical or virtual computational entities capable of enhancing information to perform various computational tasks. Furthermore, it should be appreciated that the control unit **208** may be both single hardware server and/or plurality of hardware servers operating in a parallel or distributed architecture. In an example, the control unit **208** may include components such as memory, a processor, a network adapter and the like, to store, process and/or share information with other computing components, such as user device/user equipment. Optionally, the control unit **208** is implemented as a computer program that provides various services (such as database service) to other devices, modules or apparatus. The control unit **208** identifies at least the second transmitter device **206** that is transmitting in the first channel **206** such that the first transmitter device **202** may share the first channel **206** with the second transmitter device **206** to serve more users a consistent and reliable stream of data in the presence of multiple users.

In accordance with an embodiment, the first transmitter device **202** is arranged to identify the at least second transmitter device **206** when the second transmitter device **206** initiates a spatial reuse session. The spatial reuse session enables the sharing of a channel between two or more transmitter devices using an 802.11 spatial reuse framework. A Basic Service Sets (BSS) coloring schema enables users to differentiate transmissions in their channel or transmission in the channel of the second transmitter device **206** i.e. the first channel 204. When the user that is actively listening to the channel detects a wireless frame, the user checks the initiator ID (ex. BSS color bits). If the initiator is the same as its associated transmitter device for example, the first transmission device **202,** then the user considers that frame as an intra-BSS frame. However, if the detected frame has a different initiator indication than the BSS color of the user, then the user considers that frame as an inter-BSS frame from an overlapping BSS. Hence, colouring enables users to differentiate transmissions in their channel or transmission in the first channel **204** of the second transmitter device **206.** Further, the control unit **208** of the first transmission device **202** may first validate the first channel **204** of the second transmitter device **206** before starting the spatial reuse session. Optionally, there may be more than one transmitter device that initiates the spatial reuse session. However, the control unit **208** identifies any one of the transmitter devices for the spatial reuse session.

The control unit **208** is further arranged to obtain location information related to the location of a first user terminal communicating with the second transmitter device **206.** The first user terminal may be a user device that communicates with the second transmitter device **206** using the first channel **204.** Moreover, the first user terminal may alternatively be referred to as a mobile station, a mobile terminal, a subscriber station, a remote station, a terminal, a subscriber unit etc. The location of the first user terminal is obtained by the control unit **208** to reduce interference between the first transmitter device **202** and the first user terminal, when the first transmitter device **202** transmits signals on the first channel **204** of the second transmitter device **206.**

In accordance with an embodiment, the first transmitter device **202** is arranged to obtain the location information based on information received from the second transmitter device **206** and/or at least a third transmitter device in the wireless network **200.** Herein, the third transmitter device is used as a reference for measuring location of the first user terminal from the second transmitter device **206.** The first transmitter device **202** may use any known technique for such purpose, such as, triangulation or trilateration. For example, in trilateration, the first transmitter device **202** measures distance of the first user terminal from the second transmitter device **206** by trivially seeking the intersection of three circles and/or three spheres.

According to the invention, the first transmitter device **202** is arranged to obtain location information in the form of angle of access between the first user terminal and the second transmitter device **206.** The first transmitter device **202** obtains location information between the first terminal and the second transmitter device **206** to reduce the interference. The angle of access technique (also referred to as direction of arrival) determines location information between the first user terminal and the second transmitter device **206** by determining the angle of access (also referred as angle of incidence) at which signals arrive at the first user terminal. The third transmitter device may be required along with the second transmitter device **206** for location estimation of the first user terminal with improved accuracy. The angle of access may be determined using techniques that may include, but is not limited to maximum likelihood technique, capon spectrum beam-forming and multiple signal classification (MUSIC).

In accordance with an embodiment, the first transmitter device **202** is arranged to obtain location information in the form of a position of the first user terminal. The first transmitter device **202** obtains location information of the first user terminal to reduce interference between the first transmitter device **202** and the first user terminal. The location of a first user terminal may be obtained in Cartesian coordinates. For example, the location information of the first user terminal is calculated in location coordinates defined by three axes (x axis, y axis and z axis). The position of the first user terminal may be determined using the angle of access by geometric relationships from the intersection of the two lines of bearing formed by each the second transmitter device **206** and the third transmitter device.

Optionally, the location information of the first user terminal may be determined by Received Signal Strength Indicator (RSSI) information. The RSSI helps to estimate measure of power level that the first user terminal is receiving from the second transmitter device **206.** At larger distances, power level estimated by the RSSI is less and at smaller distances power level estimated is higher. Hence, power level calculated by the RSSI provides location information of the first user terminal with respect to the second transmitter device **206.** Optionally, the location information of the first user terminal may be determined by a fine timing measurement (FTM) protocol. The FTM protocol helps to measures the distance between the first user terminal and the second transmitter device **206** based on the round-trip time (RTT) of wireless packets. Optionally, the location information of the first user terminal may be determined by difference in time of arrival (DTOA). Difference in time of arrival is an electronic technique used in direction finding and navigation, in which the time of arrival of signals from the second transmitter device **206** at physically separate the first user terminal, with precisely synchronized time references, are calculated. Optionally, precise calculation of the first user device may be avoided for simplicity if the first transmitter device **202** is equipped with smart antenna (each one is turned to another quarter) in which the smart antenna may decide in which quarter to schedule for possible transmit directions. Optionally, if more than two transmitter devices transmit on the first channel **204** then, each of the transmitter device may share location information of their respective user terminals with each other to ensure user terminal corresponding to each of the transmitter device do not cause interference in the first channel **204.** It may be appreciated that the discussed techniques are generally known in the art and thus have not been described herein in detail for the brevity of the present disclosure. Further, it may be appreciated that other similar techniques may be implemented for the said purposes without departing from the scope of the present disclosure.

In accordance with an embodiment, the first transmitter device **202** is arranged to receive said location information from the at least one user terminal. It may be appreciated that each of the user terminal may interfere with the first transmitter device **202,** while communicating with the second transmitter device **206.** Hence, the first transmitter device **202** receives location information from each of the user terminals to regulate its transmission power and direction, and thereby minimize interference in the first channel **204.** In an exemplary scenario, the second transmitter device **206** may have more than one user terminal transmitting on the first channel **204.** For example, the second transmitter device **206** may have three user terminals transmitting on the first channel **204.** Then, the first transmitter device **202** may receive location information from the more than one user terminal for increased accuracy and reduced interference. Optionally, the first transmitter device **202** may share location information of its corresponding user terminals with the second transmitter device **206** to further reduce chances of interference.

The control unit **208** of the first transmitter device **202** is further arranged to suppress energy transmission from the first transmitter device **202,** in at least a first direction selected to avoid interference with a signal transmitted by the at least second transmitter device **206.** In reference with the present disclosure, the *"first direction"* refers to direction towards the first user terminal of the second transmitter device **206.** Since, the first transmitter device **202** has prior location information of the first user terminal of the second transmitter device **206,** the controller **208** can suppress energy transmission from the first transmitter device **202** towards the direction of the first user terminal to avoid interference between the first user terminal and the first transmitter device **202.** The control unit **208** supresses energy transmission from first transmitter device **202** using smart beam-forming technique. Herein, smart beam-forming allows spatial selectivity that allows the first transmitter device **202** to steer energy transmission towards desired directions and to supress energy transmission in other directions using multiple input multiple output antennas to prevent interference. Such technique is known in the art and thus has not been described herein in detail for the brevity of the present disclosure.

Optionally, there may be multiple user terminals associated with the second transmitter device **206.** In such case, the first transmitter device **202** may supress energy transmission towards all user terminals associated with the second transmitter device **206,** in order to reduce possibility of interference. Optionally, there may be multiple transmitter devices transmitting on the first channel **204,** for example that may be a fourth transmitter device in the wireless network **100** that is communicating on the first channel **204,** then the first transmitter device **202** may supresses energy transmission towards direction of assigned user terminals of the fourth transmission device, in addition to the suppressing energy transmission towards direction of assigned user terminals of the second transmission device **206** as described above.

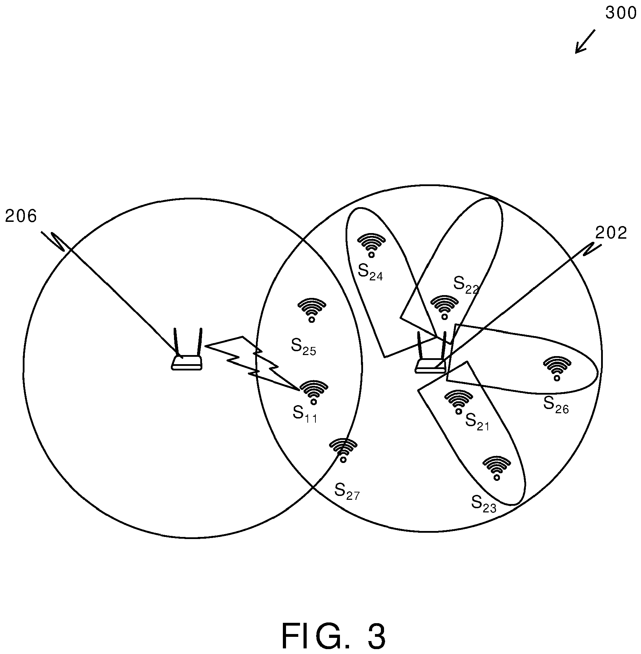

FIG. 3 is an exemplary illustration of a system **300,** representing a wireless network with the two terms being interchangeably used herein, implementing a spatial reuse technique using a smart beamforming transmission session **300,** in accordance with an embodiment of the present disclosure. In the wireless network **300** implementing the smart beamforming transmission, the first transmitter device **202** has prior location information of the first user terminals of the second transmitter device **206.** With reference to FIG. 3, there is shown the first transmitter device **202** which joins the smart beamforming transmission session in the wireless network **300** as per embodiments of the present disclosure to transmit to assigned user terminals S₂₁, S₂₂, S₂₃ to S₂₇. Herein, the first transmitter device **202** supresses energy transmission in the directions of the user terminals S₂₅ and S₂₇ to prevent interference with S₁₁ (which is assigned to the second transmitter device **206**) using smart beam-forming technique. Hence, the number of assigned user terminals of the first transmitter device **202** increases with reduced interference using smart beamforming transmission of the system **300** compared to the conventional blind spatial reuse session of the system **100A** and the conventional blind beam-forming transmission session of the system **100B.**

In accordance with an embodiment, the control unit **208** is arranged to identify a non-interfering user terminal located in a direction from the first transmitter device **202** different from the first direction and control the first transmitter device **202** to communicate with the non-interfering user terminal. The non-interfering user terminal are those assigned user terminal of the first transmitter device **202** that does not interfere with communication between the first user terminal and the second transmitter device **206** on the first channel **204.** Optionally, the control unit **208** may identifies the non-interfering user terminal using 802.11k protocol, 802.11r protocol, 802.11v protocol or combination thereof. With reference to FIG. 3, the non-interfering user terminals include S₂₁, S₂₂, S₂₃, S₂₄ and S₂₆. Further, the control unit **208** supresses energy transmission towards interfering user terminals S₂₅ and S₂₇ to avoid interference. Thus, the control unit **208** is able to identify and communicate with the non-interfering user terminals of the first transmitter device **202** to increase number of user terminals associated with the first transmitter device **202** while minimizing overall interference in the first channel **204.**

In accordance with an embodiment, the first transmitter device **202** is arranged to adjust its transmit power to prevent interference. As discussed, since the first transmitter device **202** is able identify the non-interfering user terminals by prior location information of the first user terminal of the second transmitter device **204,** the first transmitter device **202** may adjust its transmission power according to the location of the non-interfering user terminals to minimize interference. For example, in example of FIG. 3, the first transmitter device **202** may steer higher transmission power for user terminals S₂₃, S₂₄ and S₂₆ that are not located in the proximity of the first transmitter device **202.** The first transmitter device **202** may implement the smart beam-forming technique to steer power towards the non-interfering user terminals that allows the first transmitter device **202** to increase its transmit power without causing interference with neighboring terminals associated with the second transmitter device **206.** This higher transmission power from the first transmitter device **202** increases signal to interference plus noise ratio of the non-interfering user terminals. Additionally, adjusting transmission power dramatically improve the probability finding the non-interfering user terminals and thereby allows to increase the number of user terminals assigned to the first transmitter device **202** and thus, cell radius of the first transmitter device **202.** In an example, increase of 3Db in transmission power of the first transmitter device **202** can double the potential of finding the non-interfering user terminals.

In accordance with an embodiment, a device, such as an access point device for use in a wireless network characterized in that it comprises the first transmitter device **202.** Examples of the device includes, but is not limited to an Internet-of-Things (IoT) device, a smart phone, a machine type communication (MTC) device, a computing device, an evolved universal mobile telecommunications system (UMTS) terrestrial radio access (E-UTRAN) NR-dual connectivity (EN-DC) device, a server, an loT controller, a drone, a customized hardware for wireless telecommunication, a transmitter, or any other portable or non-portable electronic device. The device may comprise the first transmitter device **202** in a form of a hardware such as a smart chip.

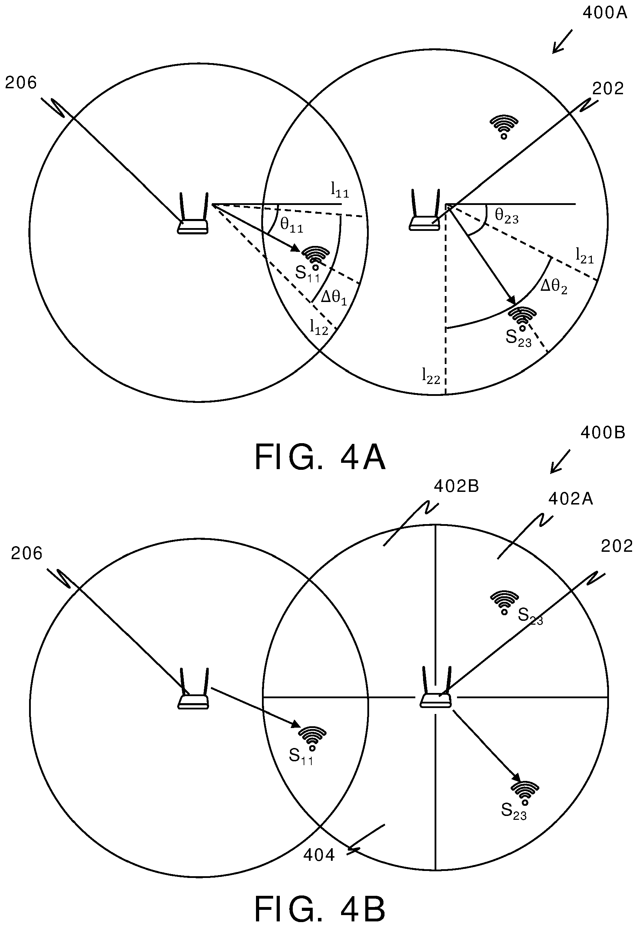

FIG. 4A is an exemplary illustration of the wireless network **300** for identifying the non-user terminal from the first transmitter device **202,** in accordance with an embodiment of the present disclosure. Herein, the second transmitter device **206** may initiate the spatial reuse session and transmit to user terminal S₁₁. Further, the first transmitter device **202** join the spatial reuse session initiated by the the second transmitter device **206** and select the non-interfering user terminal by adjusting transmission direction that minimize interference at the user terminal S₁₁. For identifying the non-user terminal from the first transmitter device **202,** angle of access for the user terminal S₁₁ (represented as *θ*₁₁) is obtained by the control unit **208** and angle of access for the user terminal S₂₃ (represented as *θ*₂₃) is calculated using the control unit **208.** Further, the control unit **208** obtains the angle of access accuracy of the second transmitter device **206** (represented as Δ*θ*₁) to determine area of coverage for the user terminal S₁₁. The area of coverage for the user terminal S₁₁ is the area in the first channel **204** that may cause interference with the user terminal S₂₃. The area of coverage for the user terminal S₁₁ is represented by sector lines I₁₁ and I₁₂. Furthermore, the control unit **208** calculates the angle of access accuracy of the first transmitter device **202** (represented as Δ*θ*₂) to determine area of coverage for the user terminal S₂₃. The area of coverage for the user terminal S₂₃ is the area in the first channel **204** that may cause interference with the user terminal S₁₁ and other user terminals transmitting in the first channel **204.** The area of coverage for the user terminal S₂₃ is represented by sector lines I₂₁ and I₂₃. The control unit **208** searches for the sector lines I₁₁ and I₁₂ of the user terminal S₁₁ and selects the non-interfering user terminal S₂₃ outside the area of coverage of the user terminal S₁₁. Further, the control unit **208** calculates the transmission power of the first transmitter device **202** according to the area of coverage for the user terminal S₁₁ that results in minimum interference. Herein, the first transmitter device **202** implements beam-forming technique to transmit data to S₂₃.

FIG. 4B is an exemplary illustration of the wireless network **300** for identifying the non-user terminal from the first transmitter device **202** using smart antennas, in accordance with an embodiment of the present disclosure. Herein, the user terminal S₂₃ is equipped with smart antenna. The smart antenna in the given example is designed in such a way that it may choose the beam to transmit according to selected quarter, using hardware switch. Hence, the smart antennas calculate desired direction of transmission without information of precise location of the user terminal of the second transmitter device **206** for simplicity. With reference to FIG. 4B, as illustrated, quarters **402A** and **402B** are regions in the first channel **204** that does not interfere with the user terminal S₁₁. Further, the quarter **404** is region in the first channel **204** that does interfere with the user terminal S₁₁. This can be determined without knowing precise location of the user terminal S₁₁ using smart antennas.

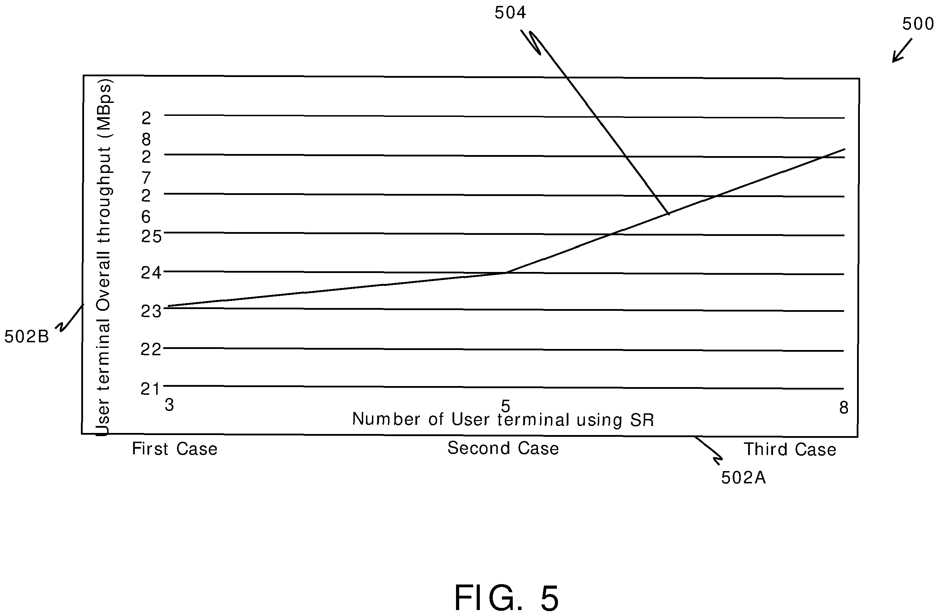

FIG. 5 is a representation of a graph **500** for simulated comparison of the conventional spatial reuse technique, the spatial reuse technique using the conventional beam-forming technique and the spatial reuse technique using the smart beam-forming technique in accordance with an embodiment of the present disclosure. Herein, FIG. 5 is described in conjunction with elements from FIGs. 1A, 1B and 3. As shown in FIG. 5, herein a first case represents transmission of the conventional first transmitter device **102** in the system **100A** of FIG. 1A by the conventional spatial reuse session **100A** and a second case represents transmission of the conventional first transmitter device **102** in the system **100B** of FIG. 1B by the spatial reuse technique using the conventional beam-forming session. Further, herein, a third case represents transmission of the first transmitter device **202** in the system **200** and/or the wireless network **300** of FIGs. 2 and 3 by the spatial reuse technique using the smart beam-forming transmission session **300** in accordance with one or more embodiments of the present disclosure. Further, with reference to FIG. 5, X-axis **502A** represents number of the user terminals engaged by the first transmitter device **102** and the first transmitter device **202** that transmit on the first channel **204** (total 15 user terminals are used for each case) at each case and a Y-axis **502B** that represents overall throughput of the conventional first transmitting device **102** and the first transmitter device **202.** As may be seen from the graph **500** of FIG. 5, line **504** represents user terminal overall throughput (in MBps) with respect to number of the user terminal engaged by the first transmitter device **102** and the first transmitter device **202** that transmit on the first channel **204** in each of the first case, the second case and the third case.

In reference with the first case, a total of three user terminals engaged by the first transmitter device **102** shares the channel with overall throughput of 23 MBps. Further, in reference with the second case, a total of five user terminals engaged by the first transmitter device **102** shares the channel with overall throughput of 24 MBps. Though, in the second case, the number of user terminals engaged by the conventional first transmitter device **102** that transmit on the same channel is slightly increased but overall throughput is not increased considerably. However, in reference with the third case, a total of eight user terminals engaged by the first transmitter device **202** shares the channel with overall throughput of about 27 MBps. For third case, the number of user terminals engaged by the the first transmitter device **202** transmitting on the first channel by the spatial reuse technique using the smart beam-forming transmission session is increased almost 3 times (from 3 user terminals in the first case to 8 user terminals in the third case) and the total throughput is increased by about 20% (from 23 MBps in the first case to about 27 MBps in the third case). Hence, the smart beam-forming transmission session as per the embodiments of the present disclosure helps to increase the number of the user terminals engaged by the first transmitter device **202** considerably while additionally increasing the total throughput of the used channel.

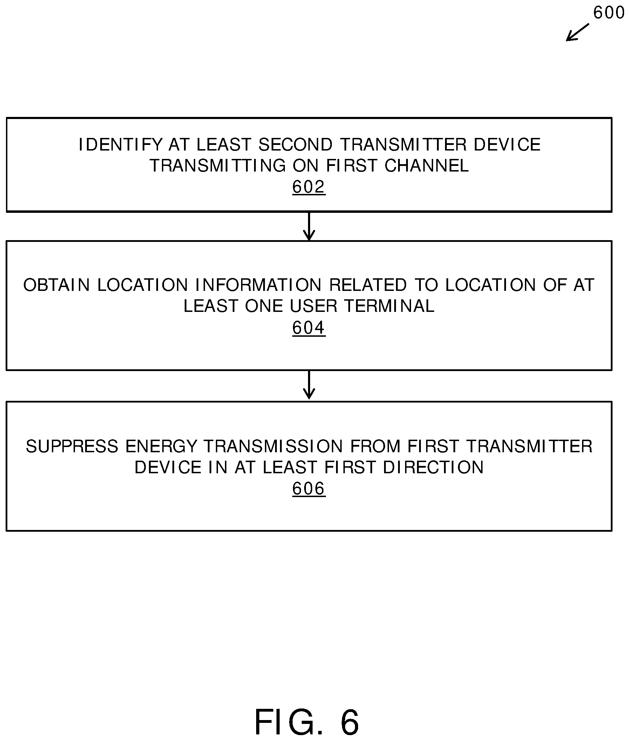

FIG. 6 is a flowchart of a method **600** for controlling a transmitter device arranged to transmit on a first channel in a wireless network, in accordance with an embodiment of the present disclosure. The various embodiments and variants disclosed above apply mutatis mutandis to the present method for controlling the transmitter device. In the present embodiments, the method **600** may be executed by a control unit (such as, the control unit **208** as described in FIG. 2).

At step **602,** at least a second transmitter is identified. The control unit **208** of the first transmitter device **202** is configured to identify the at least a second transmitter **206** transmitting on the first channel **206** in the wireless network **200.** Techniques and examples for identification of the at least second transmitter device **206** has been described in detail, for example, in FIGs. 2, 3, 4A, and 4B, and thus have not be repeated herein for the brevity of the present disclosure.

At step **604,** location information is obtained related to the location of at least one user terminal communicating with the second transmitter device **206.** Techniques and examples for obtaining the location information related to the location of at least one user terminal communicating with the least second transmitter device **206** has been described in detail, for example, in FIGs. 2, 3, and 4A, and thus have not be repeated herein for the brevity of the present disclosure.

At step **606,** energy transmission is supressed from the first transmitter device **202** in at least a first direction selected to avoid interference with a signal transmitted by the at least second transmitter device **206.** Techniques and examples for suppression of energy transmission from the first transmitter device **202** has been described in detail, for example, in FIGs. 2, 3, and 4A, and thus have not be repeated herein for the brevity of the present disclosure.

In accordance with an embodiment, the method **600** further comprises steps of identifying a non-interfering user terminal located in a direction from the first transmitter different from the first direction and controlling the first transmitter to communicate with the non-interfering user terminal. Techniques and examples for identifying the non-interfering user terminal has been described in detail, for example, in FIGs. 3, 4A, and 4B, and thus have not be repeated herein for the brevity of the present disclosure.

The steps **602** to **606** are only illustrative and other alternatives can also be provided where one or more steps are added, one or more steps are removed, or one or more steps are provided in a different sequence without departing from the scope of the claims herein.

A computer program product is provided for controlling the first transmitter device **202.** The computer program product comprising computer-readable instructions which, when performed in the control unit 208 arranged to control the first transmitter device **202,** will cause the transmitter device to identify at least the second transmitter device **206** transmitting on the first channel **204** in the wireless network **200,** obtain location information related to the location of at least one user terminal communicating with the second transmitter device **206** and suppress energy transmission from the first transmitter device **202,** in at least a first direction selected to avoid interference with a signal transmitted by the at least second transmitter device **206.** The computer program product may include suitable logic, circuitry, and/or interfaces that is configured to store machine code and/or instructions executable by the control circuitry **202** (e.g. a processor). Examples of implementation of the computer program product may include, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory. The computer program product may store an operating system and/or a computer program product to operate the first transmitting device **202.** A computer readable storage medium for providing the computer program product may include, but is not limited to, an electronic storage device, a magnetic storage device, an optical storage device, an electromagnetic storage device, a semiconductor storage device, or any suitable combination of the foregoing.

In accordance with an embodiment, the computer program product further comprises instructions which when performed in the control unit **208** will cause the first transmitter device **202** to identify a non-interfering user terminal located in a direction from the first transmitter different from the first direction and communicate with the non-interfering user terminal. Techniques and examples for identifying the non-interfering user terminal has been described in detail, for example, in FIGs. 3, 4A, and 4B, and thus have not be repeated herein for the brevity of the present disclosure.

In accordance with an embodiment, a non-transitory data memory having stored there on the computer program is provided. The data memory may include suitable logic, circuitry, and/or interfaces that may be configured to store machine code and/or instructions with at least one code section executable by the control unit **208.** Examples of implementation of the data memory may include, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), and/or CPU cache memory. The data memory may store an operating system and/or other program products to operate the first transmitting device **202.** A computer readable storage medium for providing a non-transient memory may include, but is not limited to, an electronic storage device, a magnetic storage device, an optical storage device, an electromagnetic storage device, a semiconductor storage device, or any suitable combination of the foregoing.

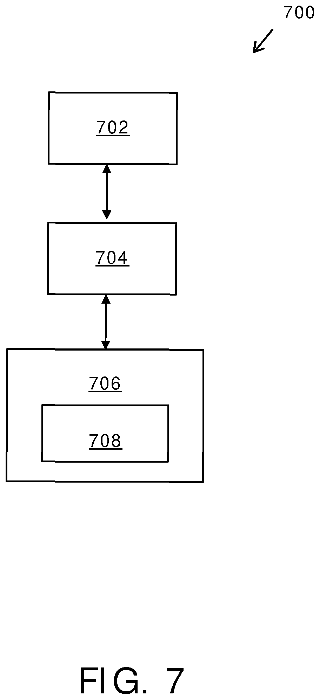

FIG. 7 is a block diagram of a device **700** for use in a wireless network, in accordance with an embodiment of the present disclosure. In accordance with an embodiment, the device **700** for use in a wireless network, comprises a transmitter device **702** (such as, the first transmitter device **202**). The device **700** refers to input and output devices that can receive input from a user and provide output to the user. The device **700** may be communicatively coupled to the control unit **208.** Examples of input devices may include, but are not limited to, a touch screen, such as a touch screen of a display device, a microphone, a motion sensor, a light sensor, a dedicated hardware input unit (such as a push button), and a docking station. Examples of output devices include a display device and a speaker. Examples of the display device include, but is not limited to a vehicle display (such as a head-up display (HUD), an augmented reality system (AR-HUD), a display screen of a driver information console (DIC), an infotainment unit or head unit (HU)), a non-vehicle display, such as a smart-glass display, a display screen of a portable device, or other display screen. The device **700** comprises the transmitter device **702.** Examples of the transmitter device **702** is same as of the first transmitter device **202.** The transmitter device **702** is arranged to transmit signals on the first channel **204.** The device **700** further comprises a processor **704** arranged to control the transmitter device **702.** Herein, the processor **704** may generally be same and perform similar functions as that of the control unit **208.** The device further comprises a program memory **706** comprising the computer program product **708** in such a way that it can be executed in the processor **704** for controlling the transmitter device **702.** The program memory **706** may be same as the non-transitory data memory, as described above. Techniques and examples for controlling the transmitter device **702** is similar to that of the first transmitter device **202** which have been described in detail, for example, in FIGs. 2, 3, 4A and 4B, and thus have not be repeated herein for the brevity of the present disclosure.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

## Claims

1. A first transmitter device (202) for use in a wireless network (200), arranged to transmit signals on a first channel (204), said transmitter device (202) comprising a control unit (208) arranged to
• identify at least one second transmitter device (206) in the wireless network (200), transmitting on the first channel (204),
• obtain location information related to the location of a first user terminal (S₁₁) communicating with the at least one second transmitter device (206),
• suppress energy transmission from the first transmitter device (202), in at least a first direction towards the first user terminal (S₁₁) selected to avoid interference with a signal transmitted by the at least one second transmitter device (206) communicating with the first user terminal (S₁₁),
wherein the first transmitter device (202) is arranged to obtain location information in the form of angle of access between the first user terminal (S₁₁) and the at least one second transmitter device (206).

2. A first transmitter device (202) according to claim 1, wherein the control unit (208) is arranged to identify a non-interfering user terminal located in a direction from the first transmitter (202) different from the first direction and control the first transmitter (202) to communicate with the non-interfering user terminal.

3. A first transmitter device (202) according to any one of the preceding claims, arranged to identify the at least one second transmitter device (206) when the at least one second transmitter device (206) initiates a spatial reuse session.

4. A first transmitter device (202) according to any one of the preceding claims, arranged to adjust its transmit power to prevent interference.

5. A first transmitter device (202) according to any one of the preceding claims, arranged to obtain location information in the form of a position of the first user terminal (S₁₁).

6. A first transmitter device (202) according to any one of the preceding claims, arranged to obtain the location information based on information received from the at least one second transmitter device (206) and/or at least a third transmitter device in the wireless network (200).

7. A first transmitter device (202) according to claim 3, arranged to receive said location information from the first user terminal (S₁₁).

8. An access point device for use in a wireless network (200) **characterized in that** it comprises a first transmitter device (202) according to any one of the preceding claims.

9. A method (600) performed by a first transmitter device (202) arranged to transmit signals on a first channel (204) in a wireless network (200), the method comprising the steps of
• identifying (602) at least one second transmitter device (206) transmitting on the first channel (204) in the wireless network (200),
• obtaining (S604) location information related to the location of at least one first user terminal (S₁₁) communicating with the at least one second transmitter device (206),
• suppressing (606) energy transmission from the first transmitter device (202), in at least a first direction towards the first user terminal (S₁₁) selected to avoid interference with a signal transmitted by the at least one second transmitter device (206) communicating with the first user terminal (S₁₁),
• obtaining location information in the form of angle of access between the first user terminal (S₁₁) and the at least one second transmitter device (206).

10. A method (600) according to claim 9, comprising the steps of identifying a non-interfering user terminal located in a direction from the first transmitter device (202) different from the first direction and controlling the first transmitter (202) to communicate with the non-interfering user terminal.

11. A computer program product for controlling a first transmitter device (202) comprising a control unit (208), the computer program product comprising computer-readable instructions which, when performed in the control unit (208) arranged to control the first transmitter device (202), will cause the transmitter device to
• identify (602) at least one second transmitter device (206) transmitting on the first channel (204) in the wireless network (200),
• obtain (604) location information related to the location of at least one first user terminal (S₁₁) communicating with the at least one second transmitter device (206),
• suppress (606) energy transmission from the first transmitter device (202), in at least a first direction towards the first user terminal (S₁₁) selected to avoid interference with a signal transmitted by the at least second transmitter device (206) communicating with the first user terminal (S₁₁),
• to obtain location information in the form of angle of access between the first user terminal (S₁₁) and the at least one second transmitter device (206).

12. A computer program product according to claim 11, further comprising instructions which when performed in the control unit (208) will cause the first transmitter device (202) to identify a non-interfering user terminal located in a direction from the first transmitter device (202) different from the first direction and communicate with the non-interfering user terminal.

13. A non-transitory data memory having stored there on a computer program product according to claim 11 or 12.

14. A device (700) for use in a wireless network (200), comprising a first transmitter device (702), further comprising a processor (704) arranged to control the first transmitter device (702) and a program memory (706) comprising a computer program product (708) according to claim 11 or 12, in such a way that it can be executed in the processor (704) for controlling the first transmitter device (702)

## Patentansprüche

1. Erste Sendevorrichtung (202) zur Verwendung in einem Drahtlosnetzwerk (200), die dazu eingerichtet ist, Signale auf einem ersten Kanal (204) zu senden, wobei die Sendevorrichtung (202) eine Steuereinheit (208) umfasst, die für folgende Vorgänge eingerichtet ist:
- Identifizieren mindestens einer zweiten Sendevorrichtung (206) im Drahtlosnetzwerk (200), die auf dem ersten Kanal (204) sendet,
- Erhalten von Standortinformationen in Bezug auf den Standort eines ersten Benutzerendgeräts (S₁₁), das mit der mindestens einen zweiten Sendevorrichtung (206) kommuniziert,
- Unterdrücken von Energieübertragung von der ersten Sendevorrichtung (202) in mindestens einer ersten Richtung zum ersten Benutzerendgerät (S₁₁), die so gewählt wird, dass Störungen mit einem Signal vermieden werden, das von der mindestens einen zweiten Sendevorrichtung (206) gesendet wird, die mit dem ersten Benutzerendgerät (S₁₁) kommuniziert,
wobei die erste Sendevorrichtung (202) dazu eingerichtet ist, Standortinformationen in Form des Zugangswinkels zwischen dem ersten Benutzerendgerät (S₁₁) und der mindestens einen zweiten Sendevorrichtung (206) zu erhalten.

2. Erste Sendevorrichtung (202) nach Anspruch 1, wobei die Steuereinheit (208) dazu eingerichtet ist, ein nicht-störendes Benutzerendgerät zu identifizieren, das sich in einer von der ersten Richtung verschiedenen Richtung vom ersten Sender (202) befindet, und den ersten Sender (202) so zu steuern, dass er mit dem nicht-störenden Benutzerendgerät kommuniziert.

3. Erste Sendevorrichtung (202) nach einem der vorhergehenden Ansprüche, die dazu eingerichtet ist, die mindestens eine zweite Sendevorrichtung (206) zu identifizieren, wenn die mindestens eine zweite Sendevorrichtung (206) eine "Spatial Reuse"-Sitzung einleitet.

4. Erste Sendevorrichtung (202) nach einem der vorhergehenden Ansprüche, die dazu eingerichtet ist, ihre Sendeleistung anzupassen, um Störungen zu vermeiden.

5. Erste Sendevorrichtung (202) nach einem der vorhergehenden Ansprüche, die dazu eingerichtet ist, Standortinformationen in Form einer Position des ersten Benutzerendgeräts (S₁₁) zu erhalten.

6. Erste Sendevorrichtung (202) nach einem der vorhergehenden Ansprüche, die dazu eingerichtet ist, die Standortinformationen auf der Grundlage von Informationen zu erhalten, die von der mindestens einen zweiten Sendevorrichtung (206) und/oder mindestens einer dritten Sendevorrichtung im Drahtlosnetzwerk (200) empfangen werden.

7. Erste Sendevorrichtung (202) nach Anspruch 3, die dazu eingerichtet ist, die Standortinformationen vom ersten Benutzerendgerät (S₁₁) zu empfangen.

8. Zugangspunktvorrichtung zur Verwendung in einem Drahtlosnetzwerk (200), **dadurch gekennzeichnet, dass** sie eine erste Sendevorrichtung (202) nach einem der vorhergehenden Ansprüche umfasst.

9. Verfahren (600), das von einer ersten Sendevorrichtung (202) durchgeführt wird, die dazu eingerichtet ist, Signale auf einem ersten Kanal (204) in einem Drahtlosnetzwerk (200) zu senden, wobei das Verfahren die folgenden Schritte umfasst:
- Identifizieren (602) mindestens einer zweiten Sendevorrichtung (206), die auf dem ersten Kanal (204) im Drahtlosnetzwerk (200) sendet,
- Erhalten (604) von Standortinformationen in Bezug auf den Standort mindestens eines ersten Benutzerendgeräts (S₁₁), das mit der mindestens einen zweiten Sendevorrichtung (206) kommuniziert,
- Unterdrücken (606) von Energieübertragung von der ersten Sendevorrichtung (202) in mindestens einer ersten Richtung zum ersten Benutzerendgerät (S₁₁), die so gewählt wird, dass Störungen mit einem Signal vermieden werden, das von der mindestens einen zweiten Sendevorrichtung (206) gesendet wird, die mit dem ersten Benutzerendgerät (S₁₁) kommuniziert,
- Erhalten von Standortinformationen in Form des Zugangswinkels zwischen dem ersten Benutzerendgerät (S₁₁) und der mindestens einen zweiten Sendevorrichtung (206).

10. Verfahren (600) nach Anspruch 9, umfassend die folgenden Schritte: Identifizieren eines nicht-störenden Benutzerendgeräts, das sich in einer Richtung von der ersten Sendevorrichtung (202) befindet, die sich von der ersten Richtung unterscheidet, und Steuern des ersten Senders (202) zum Kommunizieren mit dem nicht-störenden Benutzerendgerät.

11. Computerprogrammprodukt zum Steuern einer ersten Sendevorrichtung (202), die eine Steuereinheit (208) umfasst, wobei das Computerprogrammprodukt computerlesbare Anweisungen umfasst, die bei ihrer Ausführung in der Steuereinheit (208), die zum Steuern der ersten Sendevorrichtung (202) eingerichtet ist, die Sendevorrichtung zu folgenden Vorgängen veranlassen:
- Identifizieren (602) mindestens einer zweiten Sendevorrichtung (206), die auf dem ersten Kanal (204) im Drahtlosnetzwerk (200) sendet,
- Erhalten (604) von Standortinformationen in Bezug auf den Standort mindestens eines ersten Benutzerendgeräts (S₁₁), das mit der mindestens einen zweiten Sendevorrichtung (206) kommuniziert,
- Unterdrücken (606) von Energieübertragung von der ersten Sendevorrichtung (202) in mindestens einer ersten Richtung zum ersten Benutzerendgerät (S₁₁), die so gewählt wird, dass Störungen mit einem Signal vermieden werden, das von der mindestens einen zweiten Sendevorrichtung (206) gesendet wird, die mit dem ersten Benutzerendgerät (S₁₁) kommuniziert,
- Erhalten von Standortinformationen in Form des Zugangswinkels zwischen dem ersten Benutzerendgerät (S₁₁) und der mindestens einen zweiten Sendevorrichtung (206).

12. Computerprogrammprodukt nach Anspruch 11, ferner umfassend Anweisungen, die bei ihrer Ausführung in der Steuereinheit (208) die erste Sendevorrichtung (202) veranlassen, ein nicht-störendes Benutzerendgerät zu identifizieren, das sich in einer Richtung von der ersten Sendevorrichtung (202) befindet, die sich von der ersten Richtung unterscheidet, und mit dem nicht-störenden Benutzerendgerät zu kommunizieren.

13. Nichtflüchtiger Datenspeicher, auf dem ein Computerprogrammprodukt nach Anspruch 11 oder 12 gespeichert ist.

14. Vorrichtung (700) zur Verwendung in einem Drahtlosnetzwerk (200), umfassend eine erste Sendevorrichtung (702), ferner umfassend einen Prozessor (704), der dazu eingerichtet ist, die erste Sendevorrichtung (702) zu steuern, und einen Programmspeicher (706), der ein Computerprogrammprodukt (708) nach Anspruch 11 oder 12 umfasst, derart, dass es im Prozessor (704) zur Steuerung der ersten Sendevorrichtung (702) ausgeführt werden kann.

## Revendications

1. Premier dispositif émetteur (202) destiné à être utilisé dans un réseau sans fil (200), prévu pour émettre des signaux sur un premier canal (204), ledit dispositif émetteur (202) comprenant une unité de commande (208) prévue pour
• identifier au moins un deuxième dispositif émetteur (206) dans le réseau sans fil (200), émettant sur le premier canal (204),
• obtenir des informations d'emplacement relatives à l'emplacement d'un premier terminal utilisateur (S₁₁) communiquant avec l'au moins un deuxième dispositif émetteur (206),
• supprimer l'émission d'énergie en provenance du premier dispositif émetteur (202), dans au moins une première direction vers le premier terminal utilisateur (S₁₁) sélectionné pour éviter une interférence avec un signal émis par l'au moins un deuxième dispositif émetteur (206) communiquant avec le premier terminal utilisateur (S₁₁),
le premier dispositif émetteur (202) étant prévu pour obtenir des informations d'emplacement sous la forme d'angle d'accès entre le premier terminal utilisateur (S₁₁) et l'au moins un deuxième dispositif émetteur (206).

2. Premier dispositif émetteur (202) selon la revendication 1, dans lequel l'unité de commande (208) est prévue pour identifier un terminal utilisateur non interférent situé dans une direction à partir du premier émetteur (202) différente de la première direction et commander le premier émetteur (202) pour qu'il communique avec le terminal utilisateur non interférent.

3. Premier dispositif émetteur (202) selon l'une quelconque des revendications précédentes, prévu pour identifier l'au moins un deuxième dispositif émetteur (206) lorsque l'au moins un deuxième dispositif émetteur (206) déclenche une session de réutilisation spatiale.

4. Premier dispositif émetteur (202) selon l'une quelconque des revendications précédentes, prévu pour ajuster sa puissance d'émission afin d'empêcher une interférence.

5. Premier dispositif émetteur (202) selon l'une quelconque des revendications précédentes, prévu pour obtenir des informations d'emplacement sous la forme d'une position du premier terminal utilisateur (S₁₁).

6. Premier dispositif émetteur (202) selon l'une quelconque des revendications précédentes, prévu pour obtenir les informations d'emplacement sur la base d'informations reçues en provenance de l'au moins un deuxième dispositif émetteur (206) et/ou d'au moins un troisième dispositif émetteur dans le réseau sans fil (200).

7. Premier dispositif émetteur (202) selon la revendication 3, prévu pour recevoir lesdites informations d'emplacement en provenance du premier terminal utilisateur (S₁₁).

8. Dispositif de point d'accès destiné à être utilisé dans un réseau sans fil (200) **caractérisé en ce qu'**il comprend un premier dispositif émetteur (202) selon l'une quelconque des revendications précédentes.

9. Procédé (600) réalisé par un premier dispositif émetteur (202) prévu pour émettre des signaux sur un premier canal (204) dans un réseau sans fil (200), le procédé comprenant les étapes consistant à
• identifier (602) au moins un deuxième dispositif émetteur (206) émettant sur le premier canal (204) dans le réseau sans fil (200),
• obtenir (S604) des informations d'emplacement relatives à l'emplacement d'au moins un premier terminal utilisateur (S₁₁) communiquant avec l'au moins un deuxième dispositif émetteur (206),
• supprimer (606) l'émission d'énergie en provenance du premier dispositif émetteur (202), dans au moins une première direction vers le premier terminal utilisateur (S₁₁) sélectionné pour éviter une interférence avec un signal émis par l'au moins un deuxième dispositif émetteur (206) communiquant avec le premier terminal utilisateur (Su),
• obtenir des informations d'emplacement sous la forme d'un angle d'accès entre le premier terminal utilisateur (S₁₁) et l'au moins un deuxième dispositif émetteur (206).

10. Procédé (600) selon la revendication 9, comprenant les étapes consistant à identifier un terminal utilisateur non interférent situé dans une direction à partir du premier dispositif émetteur (202) différente de la première direction et à commander le premier émetteur (202) pour qu'il communique avec le terminal utilisateur non interférent.

11. Produit de programme informatique pour commander un premier dispositif émetteur (202) comprenant une unité de commande (208), le produit de programme informatique comprenant des instructions lisibles par ordinateur qui, lorsqu'elles sont réalisées dans l'unité de commande (208) prévue pour commander le premier dispositif émetteur (202), amèneront le dispositif émetteur à
• identifier (602) au moins un deuxième dispositif émetteur (206) émettant sur le premier canal (204) dans le réseau sans fil (200),
• obtenir (604) des informations d'emplacement relatives à l'emplacement d'au moins un premier terminal utilisateur (S₁₁) communiquant avec l'au moins un deuxième dispositif émetteur (206),
• supprimer (606) l'émission d'énergie en provenance du premier dispositif émetteur (202), dans au moins une première direction vers le premier terminal utilisateur (S₁₁) sélectionné pour éviter une interférence avec un signal émis par l'au moins un deuxième dispositif émetteur (206) communiquant avec le premier terminal utilisateur (Su),
• obtenir des informations d'emplacement sous la forme d'un angle d'accès entre le premier terminal utilisateur (S₁₁) et l'au moins un deuxième dispositif émetteur (206).

12. Produit de programme informatique selon la revendication 11, comprenant en outre des instructions qui, lorsqu'elles sont réalisées dans l'unité de commande (208), amèneront le premier dispositif émetteur (202) à identifier un terminal utilisateur non interférent situé dans une direction à partir du premier dispositif émetteur (202) différente de la première direction et à communiquer avec le terminal utilisateur non interférent.

13. Mémoire de données non transitoire dans laquelle est stocké un produit de programme informatique selon la revendication 11 ou la revendication 12.

14. Dispositif (700) destiné à être utilisé dans un réseau sans fil (200), comprenant un premier dispositif émetteur (702), comprenant en outre un processeur (704) prévu pour commander le premier dispositif émetteur (702) et une mémoire de programme (706) comprenant un produit de programme informatique (708) selon la revendication 11 ou la revendication 12, de façon à pouvoir être exécuté dans le processeur (704) pour commander le premier dispositif émetteur (702).
